Europäisches Patentamt

European Patent Office

Office européen des brevets

(19)

(11) Veröffentlichungsnummer: **0 254 247**
**A2**

# (12) EUROPÄISCHE PATENTANMELDUNG

(21) Anmeldenummer: 87110448.5

(22) Anmeldetag: 17.04.85

(51) Int. Cl.⁴: **G06F 11/14**

(30) Priorität: 26.04.84 CH 2053/84

(43) Veröffentlichungstag der Anmeldung:
**27.01.88 Patentblatt 88/04**

(60) Veröffentlichungsnummer der früheren
Anmeldung nach Art. 76 EPÜ: **0 163 096**

(84) Benannte Vertragsstaaten:
**CH DE FR GB LI**

(71) Anmelder: **BBC Brown Boveri
Aktiengesellschaft**

**CH-5401 Baden(CH)**

(72) Erfinder: **Kirrmann, Hubert, Dr.
Im Rüteli 17
CH-5405 Baden(CH)**

(54) **Einrichtung zur Rettung des Rechnerzustandes.**

(57) Zur Verringerung einer durch eine Störung bzw. Unterbrechung im Programmablauf bedingten Ausfallzeit eines Rechners (1, 4 - 8) sind zeitabhängige oder im Hauptprogramm eines Nutzprogrammes vorgebbare Programmrückzugspunkte vorgesehen, bei deren Erreichen der Rechnerzustand in mindestens einen ausfallbeständigen Archivspeicher (5, 6) gespeichert wird.

Als Archivspeicher wird ein ein Kaskadenspeicher verwendet

FIG.4

EP 0 254 247 A2

## Einrichtung zur Rettung des Rechnerzustandes

Bei der Erfindung wird ausgegangen von einer Einrichtung zur Rettung des Rechnerzustandes nach dem Oberbegriff des Patentanspruchs 1.

Grundsätzlich werden bei Rechnern drei Arten der Unterbrechung, mit zunehmendem Schwierigkeitsgrad bei der Behandlung, angetroffen:

-Die klassische Programmunterbrechung, die durch ein äusseres Ereignis mit einer Unterbrechungsanforderung ausgelöst wird, und die nach Beendigung der laufenden Instruktion durch den Prozessor abgearbeitet wird. Die Hardware des Prozessors sorgt dafür, dass der Programmzähler und das Statuswort als erste im Arbeitsspeicher gerettet werden, damit nach der Abarbeitung der Unterbrechung der Prozessor den Zustand vor der Unterbrechung wiederherstellen kann.

-Die Instruktionsunterbrechung, die auftritt, wenn die laufende Instruktion nicht zu Ende bearbeitet werden kann, z.B. in einem System mit einem virtuellen Speicher, wegen eines Leergriffes auf dem physikalischen Speicher oder in einem System mit Fehlerdetektion wegen eines Busfehlers. Diese Instruktionsunterbrechung zwingt den Prozessor dazu, die Instruktion zu verlassen und ein Programm abzuarbeiten, das den fehlenden Speicherabschnitt aus dem Massenspeicher holt, bzw. das den misslungenen Buszugriff wiederholt. Danach soll die unterbrochene Instruktion weitergerechnet werden.

Da der Prozessor mitten in einer Instruktion unterbrochen wird, muss er genügend Information aus seinem inneren Zustand retten, damit er die unterbrochene Instruktion nach Bereitstellung der Daten oder nach Korrektur wieder fortsetzen kann. Dies erfordert wesentlich mehr Aufwand als die klassische Programmunterbrechung. Eine solche Einrichtung besitzt der Mikroprozessor MC 68010, der in der deutschen Zeitschrift Elektronik, Heft 22, 1983, S. 75-78, beschrieben ist.

-Der Ausfall gilt als der schwierigste Unterbrechungsfall, da der Zustand des Prozessors nach Entdeckung des Ausfalles nicht mehr gerettet werden kann, wie dies bei den oben genannten Fällen geschah, da es unsicher ist, ob der Prozessor den Ausfall intakt überstanden hat. Auch ist nicht bekannt, wie lange der Ausfall schon dauert und was er für Auswirkungen auf den Rechnerzustand hatte. Der Inhalt des Arbeitsspeichers gilt auch dann als verdächtig, wenn alle Fehlerdetektionskode der Speicherzellen stimmen, da Unsicherheit darüber besteht, was für Aktionen der bereits beschädigte Prozessor ausgeführt hat. Für den Ausfall sind bei den bekannten Mikroprozessoren keine Vorsorgemassnahmen getroffen worden.

In der USA-Veröffentlichung "Proceedings of the 12th International Conference on Fault Tolerant Computing FISC-12", 1982, pp 127-132 wird unter dem Titel "PENELOPE: A RECOVERY MECHANISM FOR TRANSIENT HARDWARE FAILURE AND SOFTWARE ERRORS" von Kubiak et al. eine Einrichtung beschrieben, die zwischen einem Prozessor und seinem Arbeitsspeicher eingefügt ist, und die es erlaubt, im Falle eines Ausfalles einen früheren Betriebszustand sowohl des Speichers wie des Prozessors wiederherzustellen. Diesen früheren Zustand definiert ein Rückzugspunkt (Recovery Point).

Diese Einrichtung ist am Prozessorbus angeschlossen und verfolgt die Buszugriffe, mit denen der Prozessor den Zustand des Arbeitsspeichers verändert (Schreibzyklen). Jeweils bevor eine Variable im Arbeitsspeicher verändert wird, adressiert diese Einrichtung, die "Rettungsstapel" (Save Stack) genannt wird, die betroffene Variable, liest den früheren Inhalt und rettet ihn in einem Stapelspeicher (Stack).

Am Anfang eines Programmabschnittes, also an einem Rückzugspunkt, ist der Rettungsstapel leer. Der Zustand des Rechners an diesem Rückzugspunkt soll wiederhergestellt werden können, falls es zu einem Ausfall kommt, bevor der nächste Rückzugspunkt erreicht wird. Nach Entdeckung eines Ausfalles wird der Prozessor neu initialisiert, und der Rettungsstapel wird rückwärts in den Arbeitsspeicher zurückgeschrieben. Dadurch bekommen alle Variablen ihren früheren Wert, nämlich denjenigen, den sie hatten, als der Rettungsstapel leer war, also am letzten Rückzugspunkt, auch wenn dieser Wert mehrmals inzwischen verändert wurde.

Die obengenannte Veröffentlichung basiert auf einer früheren Arbeit von P.A. Lee, N. Ghani, K. Heron, A recovery Cache for the PD 11, Proc. of FTCS 9 Madison 1979, pp. 3-8, die in der Literaturliste der obengenannten Veröffentlichung zitiert ist. Andere und frühere Erfinder benützen für das gleiche Verfahren einen Cache-Speicher, ohne dass das Prinzip, das man als "Retten vor Aendern" nennt, davon tangiert wäre. Im Hinblick auf dieses Prinzip können weiter gennant werden: FR-A-2,268,306, DE-A2 22 40 432, DE-A1 21 63 162 und "IEEE Transactions on Computers", Band C-29, Nr. 6, Juni 1980, S. 546-549. Das "Retten vor Aendern"-Verfahren weist drei entscheidende Nachteile auf:

1. Es gibt nur einen Schutz gegen Fehlfunktionen des Prozessors, die keine zweideutige Auswirkungen auf den Arbeitsspeicher haben, z.B. marginale oder falsche Steuerungssignale, die eine Veränderung der Adresse oder der Daten zur Folge haben, ohne dass der Rettungsstapel davon erfährt.

2. Fehler oder Verluste des Arbeitsspeichers selbst können nicht korrigiert werden. Es wird nach dem Ausfall angenommen, dass alle Speicherzellen, die seit dem letzten Rückzugspunkt nicht zum Schreiben adressiert wurden, auch tatsächlich noch intakt sind.

3. Der Rettungsstapel kann nur einmal zur Wiederherstellung herangezogen werden. Falls es zu einem Ausfall während des Rückschreibens kommen sollte, ist der frühere Inhalt des Arbeitsspeichers nicht mehr wiederherstellbar.

Aus Conference Proceedings, the 9th Annual Symposium on Computer Architecture", 26. - 29.04.82, Seiten 171 - 180 ist ein Multiprozessorsystem bekannt mit mehreren Prozessormodulen, die jeweils einen Prozessor, einen lokalen Speicher und sog. Zustands-Rettungs-Einheiten als Archivspeicher enthalten. Die Prozessoren retten ihren Zustand (Variablen und Registerinhalte) an verschiedenen Punkten der Programmausführung in regelmässigen Abständen. Zur Verringerung der für die Zustandsrettung erforderlichen Zeit wird diese während des Programmablaufs ausgeführt. Jede Aenderung von Variablen in der lokalen Speichern wird in den Zustands-Rettungs-Einheiten simultan registriert. Zwei solcher Einheiten sind vorgesehen zur Rettung des Zustands in zwei aufeinanderfolgenden Intervallen. Jeder Prozessor hält einen gültigen Zustand in einer der beiden Einheiten fest während er den sich aktuell ändernden Zustand in den jeweils anderen abspeichert. Da demnach die aktuellen Aenderungen nur in jeweils einer der beiden Einheiten registriert werden muss die jeweils andere Enheit an jedem Programmrückzugpunkt aktualisiert werden.

Die Erfindung, wie sie in den Patentansprüchen definiert ist, löst die Aufgabe, das Verhältnis der Nutzarbeitszeitdauer zur Rettungszeitdauer zu verbessern.

Die Erfindung lehrt demnach die Verwendung eines Kaskadenspeichers, der als integrierte Schaltung ausgeführt ist.

Die Erfindung wird nachstehend anhand von Ausführungsbeispielen erläutert. Es zeigen:

Fig. 1 ein Blockschaltbild eines Rechners mit einem Prozessor, einem Arbeits-und zwei Archivspeichern,

Fig. 2 ein Zeitdiagramm der Rettung des Rechnerzustandes durch zwei Archivspeicher, die nach einer Nutzarbeit aktualisiert werden,

Fig. 3 ein Zeitdiagramm der Rettung des Rechnerzustandes durch zwei Archivspeicher gemäss Fig. 1, wobei ein Archivspeicher während der Nutzarbeit aktualisiert wird und der andere danach,

Fig. 4 eine Speichereinheit eines Staffelspeichers,

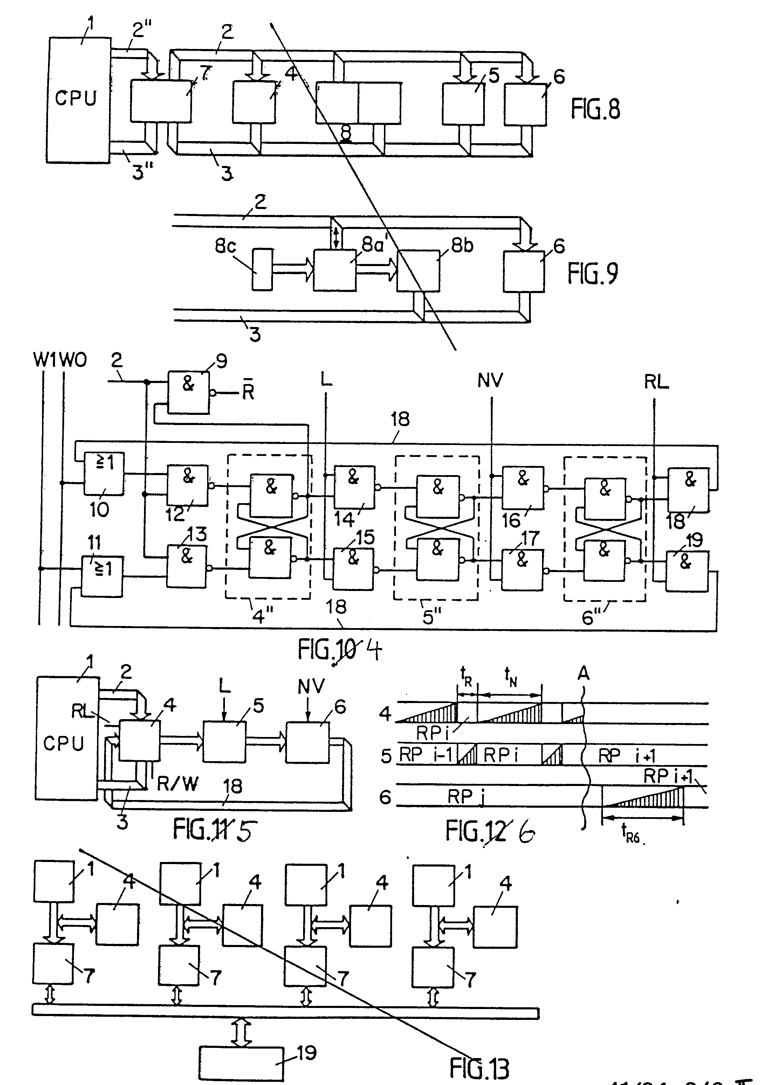

Fig. 5 einen fehlertoleranten Rechner mit einem Staffelspeicher gemäss Fig. 10,

Fig. 6 ein Zeitdiagramm der Rettung des Rechnerzustandes unter Verwendung eines doppeltgepufferten, ausfallbeständigen Speichers und

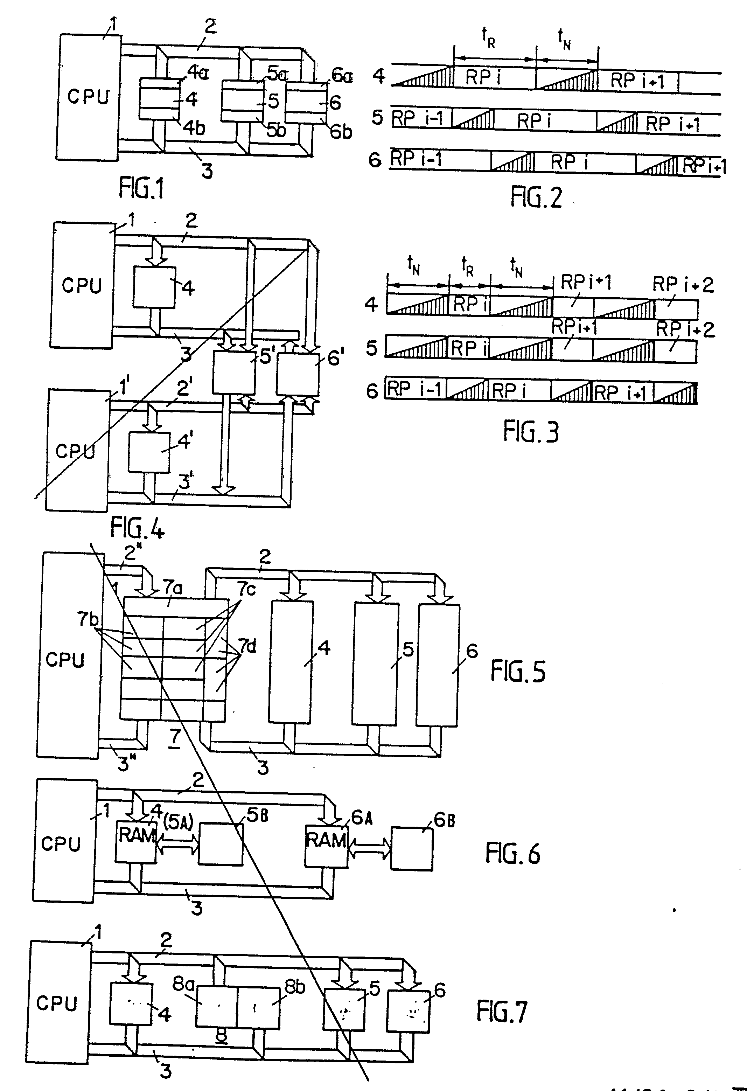

In Fig. 1 ist mit 1 ein Prozessor bezeichnet, mit 2 ein Adressenbus, mit 3 ein Datenbus, mit 4 ein Arbeitsspeicher, mit 5 und 6 zwei Archivspeicher bzw. mit 5 eine Archivspeicher-Zone 1 und mit 6 eine Archivspeicher-Zone 2. 4a, 5a und 6a bezeichnen Adressendekodierer im Arbeitsspeicher 4 bzw. in den Archivspeichern 5 und 6; 4b, 5b und 6b Kopierbereiche für den Prozessorzustand in dem Arbeitsspeicher 4 bzw. in den Archivspeichern 5 und 6.

Für den normalen Rechnerbetrieb ist nur der Prozessor 1 und sein Arbeitsspeicher 4 erforderlich. Die Archivspeicher 5 und 6 dienen der Fehlertoleranz. Beim Prozessorbus wurden der Adressenbus 2 und der Datenbus 3 bzw. die Adressen-und Datenleitungen getrennt gezeichnet, um die Erläuterungen zu vereinfachen. Es könnte sich ebenso gut um einen multiplexierten Bus oder um einen seriellen Bus handeln.

Die Arbeit des Prozessors besteht aus: 1. Nutzarbeit, 2. Zustandsrettung und 3. Wiederherstellung des Zustandes nach Ueberwindung des Ausfalls.

Nutzarbeit: Die Nutzarbeit ist der normale Betrieb der Abarbeitung eines Nutzprogrammes. Wenn es während der Nutzarbeit zu einem Ausfall kommen sollte, dann unternimmt der Prozessor 1 nach der Reparatur eine Wiederherstellung, wie nachfolgend erläutert wird.

Die Nutzarbeit wird in Schritte eingeteilt, die Rückzugsblöcke oder kurz Blöcke heissen. Die Blöcke gelten als unteilbare Operationen: entweder werden sie fertig gerechnet, oder der Rechner kehrt zum Zustand vor dem Block zurück.

Rückzugspunkt: Der Zustand des Rechners zu einem beliebigen Zeitpunkt ist definiert durch den augenblicklichen Zustand des Nutzprogrammes, d.h. durch den Zustand seiner Variablen, durch den Zustand der internen Register des Prozessors und der nicht dargestellten Ein-und Ausgabegeräte, kurz E/A-Geräte genannt. Registerzustand und Zustand der E/A-Geräte werden als Prozessorzustand oder Kontext bezeichnet. Der Programmcode gehört hingegen nicht zum Zustand. Variablenzustand und Prozessorzustand bilden zusammen den Rechner-oder Aufgabenzustand. Der Prozessorzustand ist im Kopierbereich 4b des Arbeitsspeichers 4 gespeichert. Insgesamt enthält also der Arbeitsspeicher 4 den gesamten Aufgabenzustand.

Der Aufgabenzustand am Anfang eines Blockes wird als Rückzugspunkt i, kurz RPi bezeichnet, der Zustand am Anfang des nächsten Blockes als Rückzugspunkt i + 1, kurz RPi + 1.

Die Rückzugspunkte werden in regelmässigen Zeitabständen oder nach Bedarf gewählt. Der Zustand am Rückzugspunkt wird durch Abarbeitung eines Zustandsrettungsprogrammes festgehalten. Der Abstand zwischen benachbarten Rückzugspunkten ist durch die Anwendung gegeben. In schnellen Prozessen darf der Abstand einige 100 ms nicht überschreiten, in Datenverarbeitungsanwendungen darf er einige Stunden betragen.

Bei Ausfall innerhalb eines Blockes soll der Prozessor die abgebrochene Arbeit aufgeben und versuchen, nach Reparatur den Zustand RPi, wie er am Anfang des Blockes war, wieder herzustellen, um von dort aus den Block erneut abzuarbeiten. Dies ist die Aufgabe des Wiederherstellungsprogrammes.

Zustandsrettung und Archivspeicher: Es wird angenommen, dass bei Ausfall des Systems der Zustand des Prozessors 1 und des Arbeitsspeichers 4 verloren geht. Damit der Aufgabenzustand nach der Reparatur wiederhergestellt werden kann, muss dieser bei jedem Rückzugspunkt in einen nicht flüchtigen, d.h. ausfallbeständigen Archivspeicher kopiert werden. Der Archivspeicher soll alle Informationen enthalten, die es ermöglichen, nach Ueberwindung eines Ausfalles die Arbeit dort wieder aufzunehmen, wo sie im Zeitpunkt des Ausfalles oder kurz davor unterbrochen wurde.

Die Zustandsrettung kann parallel zur Nutzarbeit oder nach der Nutzarbeit stattfinden. Zunächst nehmen wir an, dass Nutzarbeit und Zustandsrettung hintereinander stattfinden.

Am Anfang eines Blockes enthält der Archivspeicher den Zustand RPi. Wenn ein Block fehlerfrei fertiggerechnet wurde, dann wird der Zustand des Prozesses RP i + 1 aus dem Arbeitsspeicher 4 in der Archivspeicher 5 kopiert, und der nächste Block kann beginnen.

Die Kopieroperation aus dem Arbeitsspeicher in den Archivspeicher kann durch den Prozessor 1 selbst ausgeführt werden, indem er eine Zelle des Arbeitsspeicher 4 zum Lesen adressiert und die entsprechende Zelle des Archivspeichers 5 zum Schreiben.
Anstelle des Prozessors 1 kann ein nicht dargestelltes Steuergerät mit direktem Speicherzugriff die Kopierarbeit etwas schneller als der Prozessor durchführen.

Der Archivspeicher 5 sollte die gleiche Organisation wie der Arbeitsspeicher aufweisen, d.h. er sollte gleich viel Speicherplätze mit der gleichen Einteilung wie der Arbeitsspeicher 4 haben. Zu jeder Speicherzelle im Arbeitsspeicher 4 gibt es eine entsprechende Speicherzelle im Archivspeicher 5. Die Busadressen der entsprechenden Speicherzellen im Arbeitsspeicher 4 und im Archivspeicher 5 brauchen nicht übereinzustimmen, sie können sich z.B. im höchstwertigen Bit unterscheiden, um den Schaltungsaufwand zu verringern. Es ist jedoch vorteilhaft, wenn bei entsprechenden Speicherzellen vom Arbeitsspeicher 4 und Archivspeicher 5 die Adresse relativ zum Speicheranfang die gleiche ist.

Ausserdem nehmen wir zunächst an, dass der Archivspeicher 5 annähernd so schnell wie der Arbeitsspeicher 4 ist. Der Archivspeicher 5 könnte z.B. ein gepufferter CMOS-Lese-/Schreibspeicher, ein nicht flüchtiger Lese-/Schreibspeicher RAM, wie er z.B. unter der Bezeichnung INTEL 2004 im Handel erhältlich ist, oder ein langsamerer Speicher, wie z.B. ein Kernspeicher, sein.

Andere nicht-flüchtige Speicher, wie EAROM oder EEPROM eignen sich für diese Aufgabe weniger, denn sie sind im Schreiben um Grössenordnungen bis zu 10 000 langsamer als der benötigte Arbeitsspeicher. Eine Diskette, optische und magnetische Platten sind nicht nur aus Geschwin digkeitsgründen problematisch, ihre Organisation unterscheidet sich vom linearen Aufbau eines Speichers beträchtlich, und es muss erst eine geeignete Abbildung hergestellt werden.

Wiederherstellung: Die Wiederherstellung besteht darin, dass der Prozessor 1 nach überstandener Reparatur auf seine Zuverlässigkeit hin in Selbst-oder Fremdtest geprüft wird. Dann lädt der Prozessor oder das Steuergerät mit direktem Speicherzugriff den Aufgabezustand, der im Archivspeicher 5 abgelegt wurde, wieder in den Arbeitsspeicher 4. Danach werden die E/A-Geräte und der Prozessor 1 mit ihrem internen Zustand (Prozessorzustand) geladen. Zuletzt wird der Programmzähler des Prozessors 1 gesetzt, und die Nutzarbeit kann wieder beim letzten Rückzugspunkt beginnen.

Verdoppelung des Archivspeichers: Während des Kopierens des Rückzugpunktes in den Archivspeicher 5 ist der Archivspeicher 5 inkonsistent, er enthält Teile aus dem RP i und Teile aus dem RP i + 1. Die Kopieroperation sollte unteilbar sein, d.h., sie wird entweder voll ausgeführt oder gar nicht. Da die Kopieroperation eine endliche Zeit dauert, ist die Wahrscheinlichkeit eines Ausfalles während dieser Zeit nicht vernachlässigbar. Der Archivspeicher 5 verliert zwar keine Information im Falle eines Ausfalles, aber die Zone bzw. der Speicherbereich, der zum Zeitpunkt des Ausfalles in Bearbeitung bzw. in Nachführung war, ist inkonsistent und gilt als verloren.

Aus diesem Grund wird der Archivspeicher in zwei indentische Hälften, die Archivspeicherbereiche 5 und 6, aufgeteilt. Der Prozessor 1 kann in beide Bereiche des Archivspeichers 5, 6 schreiben, jedoch nicht zur gleichen Zeit. Kein Ausfall soll den Prozessor 1 dazu bringen, den Teil des Archivspeichers zu verändern, mit dem er gerade nicht arbeitet.

Am Anfang eines Blockes enthalten beide Bereiche 5 und 6 des Archivspeichers denselben Inhalt, nämlich je eine Kopie des Arbeitsspeichers 4 (Prozesszustand am RP i). Beide Archivspeicher bzw. Archivspeicherbereiche werden nacheinander aktualisiert, d.h. auf RP i + 1 gebracht. Als Konvention nehmen wir an, dass zuerst der Archivspeicher 5 aktualisiert wird und danach der Archivspeicher 6.

Die Zustandsrettung erfolgt folgendermassen:

1) der Prozessor markiert den Archivspeicher 5 als ungültig,

2) er kopiert den Inhalt des Arbeitsspeichers 4 in den Archivspeicher 5 hinein,

3) er markiert den Archivspeicher 5 wieder als gültig.

Die Kopien können mit der physikalischen oder mit einer logischen Uhrzeit zur Markierung ihrer Gültigkeit versehen werden.

Derjenige Speicherbereich des Archivspeichers, der gerade in Bearbeitung ist, wird als "-schmutziger" Bereich und der andere als "sauberer" Bereich bezeichnet.

Der Prozessor 1 führt die Zustandsrettung zunächst mit dem Archivspeicher 5 aus. Dann werden die Rollen der schmutzigen und sauberen Bereiche vertauscht. Der Prozessor 1 führt dann die gleiche Operation mit dem Archivspeicher 6 aus.

Wenn es während des Kopierens einer der beiden Speicherbereiche zu einem Ausfall kommt, dann ist immer eine der Kopien sauber, unter der Annahme, dass der Prozessor 1 den Bereich des Archivspeichers, mit dem er gerade nicht arbeitet, auch bei Ausfall nicht verändern kann.

Aus Fig. 2 ist der Ablauf der Operationen ersichtlich. Die schraffierten Zonen bedeuten, dass die betreffende Zone in Bearbeitung ist. Rückzugspunkte sind mit RP i-1, RP i und RP i + 1 bezeichnet. $t_R$ bezeichnet die Rettungszeitdauer und $t_N$ die Nutzarbeitszeitdauer. Während der Aktualisierung des Archivspeichers 5 bleibt der Inhalt des Archivspeichers 6 unverändert, während der Aktualiesierung des Archivspeichers 6 bleibt der Inhalt des Archivspeichers 5 unverändert.

Wiederherstellung: Wenn ein Ausfall während der ersten Kopie stattfindet, dann kehrt der Prozessor wieder auf den letzten Rückzugspunkt RP i zurück, wenn er während der zweiten Kopie stattfindet, dann fängt der Prozessor 1 mit dem neuen Rückzugspunkt RP i + 1 an. Wenn beide Kopien gültig sind und den gleichen RP enthalten, dann nimmt der Prozessor 1 irgendeine Kopie.

Ein Wiederherstellungsprogramm prüft nach überstandener Reparatur, welche Hälfte des Archivspeichers einen gültigen RP enthält, und wenn dies auf beide Hälften zutrifft, dann wird der jüngere RP ausgewählt. Dann wird die Aufgabe ab diesem Punkt wiederaufgenommen.

Zahlenbeispiel: Es wird hier nur ein 8-Bit-Prozessor betrachtet, die Erweiterung auf 16-Bit-oder 32-Bit-Prozessoren ist trivial.

Bei einem typischen Programm wird der Adressraum M auf 64 KB (1 KB = 1024 Worte) bemessen. Obwohl der Adressraum nie ganz aufgefüllt ist, müssen doch, um dem schlimmsten Fall vorzubeugen, alle 64 KB, also 65 536 Worte, gerettet werden.

Ein üblicher Mikroprozessor führt pro Sekunde etwa $10^6$ Lese-oder Schreiboperationen aus. Jede Operation dauert 1 μs. Der Prozessor oder eine Steuereinrichtung mit direktem Speicherzugriff benötigen zwei Speicherübertragungen von je 1 μs um ein Wort (2 Byte) aus dem Arbeitsspeicher 4 in den Archivspeicher 5 oder 6 zu übertragen (eine Lese-und eine Schreiboperation), so dass die Rettungszeit $t_R$ für ein Wort

$$ts = 2 \ \mu s$$

beträgt. Damit dauert die Zustandsrettung

$$t_R = 2 \times 65\ 536 \ \mu s \approx 262 \ ms.$$

Diese Zeit kann bei zeitkritischen Anwendungen beträchtlich sein, bei vielen Anwendungen ist sie jedoch zulässig.

Vereinfachung der Zustandsrettung: Die oben beschriebene Zustandsrettung ist insbesondere bei einem grossen Speicher zeitraubend. Damit ein vernünftiges Verhältnis zwischen Nutzarbeit und Rettungszeitdauer besteht, sollen die Rückzugsblöcke mindestens so lang wie die doppelte Rettungszeitdauer sein, was in zeitkritischen Anwendungen nicht immer tolerierbar ist.

Mit der nachstehend beschriebenen erfindungsgemäßen Einrichtung kann die Rettungszeitdauer wesentlich reduziert werden.

Fig. 10 zeigt einen Staffelspeicher, der sich als integrierte Schaltung ausführen lässt und eine Verkürzung der Rettungszeit durch eine neue Speicherstruktur ermöglicht. 4″ bezeichnet eine Arbeitsspeicherzelle, die aus einem schnellen Flipflop besteht. Mit 5″ wird eine Kaskadenspeicherzelle bezeichnet, ebenfalls aus schnellen Flipflops, mit 6″ wird eine Archivspeicherzelle bezeichnet, die aus einem ausfallbeständigen Speicherelement besteht, z.B. wie dies beim Hintergrundspeicher des INTEL 2004 der Fall ist. Die Arbeitsspeicherzelle 4″ ist durch Schaltglieder 12, 13, die aus NAND-Gliedern bestehen, ansteuerbar. Als Schaltglieder zur Ansteuerung der Kaskaden-und Archivspeicherzellen 5″ und 6″ sind NAND-Glieder 14 und 15 bzw. 16 und 17 vorgesehen, die über eine Ladeleitung L bzw. eine Kopierbefehl-Signalleitung NV ansteuerbar sind. Die NAND-Glieder 12 und 13 sind durch die Adressignalleitung bzw. den Adressenbus 2 ansteuerbar. Die Adressignalleitung 2 ist andererseits dem Eingang eines NAND-Gliedes 9 zugeführt, dessen zweiter Eingang mit einem Ausgang der Arbeitsspeicherzelle 4″ verbunden ist. Am Ausgang des NAND-Gliedes 9 ist ein Lesesignal $\bar{R}$ abgreifbar. Die Archivspeicherzelle 6″ ist über NAND-Glieder 18 und 19, welche durch eine Rückladeleitung RL ansteuerbar sind, mit dem Eingang von ODER-Gliedern 10, 11 verbunden. Ein zweiter Eingang des ODER-Gliedes 10 ist mit einer Schreibsignalleitung W0 verbunden und dessen Ausgang mit einem zweiten Eingang des NAND-Gliedes 12. Ein zweiter Eingang des ODER-Gliedes 11 ist mit einer Schreibsignalleitung W1 verbunden, deren Signal komplementär zu dem Signal der Leitung W0 ist. Der Ausgang dieses ODER-Gliedes 11 ist mit einem zweiten Eingang des NAND-Gliedes 13 verbunden.

Bei diesem Kaskadenspeicher erfolgt das Kopieren vom Arbeitsspeicher 4″ in den Archivspeicher 5″ in einer unteilbaren Operation, ohne Intervention des Prozessors oder einer Steuereinrichtung mit direktem Speicherzugriff. Die Kaskadenspeicherzelle 5″ stellt eine Schattenzelle zur Arbeitsspeicherzelle dar. Damit der Rechnerzustand auch bei Ausfall der Stromversorgung aufrechterhalten bleibt, wird die Kaskadenspeicherzelle 5″ noch durch eine ausfallbeständige Archivspeicherzelle 6″ ergänzt.

Der Gesamtaufbau des Rechners ist aus Fig. 11 ersichtlich. R/W bezeichnet eine Lese-/Schreibsignalleitung und 18 einen internen Datenpfad, entsprechend Fig. 10. Dieser Datenpfad 18 ist von aussen nicht zugänglich und so breit wie der Speicher selbst.

Im Normalfall wird mit der Arbeitsspeicherzelle 4″ des Speichers gearbeitet. Die Gesamtheit der Arbeitsspeicherzellen verhält sich genau so wie der Arbeitsspeicher in Fig. 1. Eine Zelle wird durch die Adressleitung 2 adressiert. Sie kann über die komplementären Schreibsignalleitungen W0 und W1 beschrieben werden; im Ruhezustand sind W0 und W1 auf 0. Der Zelleninhalt kann über die Leseleitung R herausgelesen werden.

Bei jedem Rückzugspunkt wird der Inhalt der Arbeitsspeicherzelle 4″ in die Kaskadenspeicherzelle 5″ durch Aktivierung der Ladeleitung L kopiert. Das Kopieren dauert weniger als 1 μs, da die Kaskadenspeicherzelle 5″ ebenfalls aus schnellen RAM-Bauelementen aufgebaut ist. Die Wahrscheinlichkeit eines Ausfalles während der Kopierzeitdauer darf als sehr gering betrachtet werden;

sie beträgt etwa 15 ns. Wichtig ist dabei, dass sämtliche Arbeitsspeicherzellen in die Kaskadenarchivspeicherzellen gleichzeitig kopiert werden, d.h. die L-Leitung ist gemeinsam für alle Speicherzellen.

Wenn es zu einem Ausfall der Stromversorgung oder sonst zu einem Fehler kommt, dann wird der Inhalt der Kaskadenspeicherzelle 5″ in die Archivspeicherzelle 6″ in einer Operation durch Aktivierung der NV-Leitung kopiert. Diese Operation dauert etwa 10 000 mal so lang wie das Kopieren vom Arbeitsspeicher in den Kaskadenspeicher 5″, da die Archivspeicherzellen 6″ aus ausfallbeständigen Speicherelemente aufgebaut sind, ähnlich denjenigen des INTEL 4002.

Eine Pufferung der Stromversorgung soll die Spannung noch für die Dauer der Kopieroperation aufrechterhalten, und dies auch bei Kurzschluss der Stromversorgung. Eine nichtdargestellte Diode kann zur Trennung verwendet werden.

Wenn die Speisespannung wieder vorhanden und der Prozessor wieder als zuverlässig eingestuft sind, dann wird der Inhalt der Archivspeicherzelle 6″ in einer Operation in den Arbeitsspeicher 4″ zurückkopiert durch Aktivierung der RL-Leitung. Von diesem Moment an enthält der Arbeitsspeicher 4″ wieder den Zustand am letzten Rückzugspunkt, und der Prozessor kann die Arbeit wieder aufnehmen.

Auf die Kaskadenspeicherzelle 5″ kann nicht verzichtet werden, da der Zustand der Arbeitsspeicherzelle 4″ zu einem beliebigen Zeitpunkt nicht konsistent ist. Man kann von einem Prozessor 1 nicht verlangen, dass er im Zeitpunkt eines Fehlers noch seinen internen Zustand zuverlässig speichert.

Darum wird der Inhalt des Arbeitsspeichers in regelmässigen Abständen, d.h. bei jedem Rückzugspunkt, in den Kaskadenspeicher 5 geladen.

Fig. 12 zeigt den zeitlichen Ablauf der Zustandsrettung unter Verwendung eines doppelt gepufferten, ausfallbeständigen Speichers. A bezeichnet den Ausfall bzw. die Unterbrechung und $t_R$ gibt die Rettungszeitdauer in der Kaskadenspeicherzelle 6″.

## Ansprüche

1. Einrichtung zur Rettung des Zustandes eines Rechners an Programmrückzugspunkten in dem von dem Rechner abzuarbeitenden Programm, mit folgenden Merkmalen:

a) Es ist ein Arbeitsspeicher (4) vorgesehen;

b) der Arbeitsspeicher steht über einen Adresse-und Datenbus (2,3) mit einem ersten Archivspeicher oder Archivspeicherbereich in Wirkverbindung;

weiter gekennzeichnet durch folgende Merkmale:

c) der Arbeitsspeicher steht über den Adress-und Datenbus (2,3) mit einem zweiten Archivspeicher oder Archivspeicherbereich in Wirkverbindung;

d) sowohl der erste als auch der zweite Archivspeicher oder Archivspeicherbereich sind mindestens in Teilbereichen (5b,6b) ausfallbeständig;

e) der Arbeitsspeicher (4) ist zusammen mit den Archivspeichern (5,6) in einem Kaskadenspeicher vereinigt;

f) jede Speichereinheit des Kaskadenspeichers weist eine Arbeitsspeicherzelle (4″) auf, die über mindestens ein erstes Schaltglied (12,13) ansteuerbar ist;

g) jede Speichereinheit weist eine erste Kaskadenspeicherzelle (5″) auf, die über mindestens ein zweites Schaltglied (14,15) mit dem Ausgang der Arbeitsspeicherzelle in Wirkverbindung steht;

h) jede Speichereinheit weist eine Archivspeicherzelle (6″) auf, die über mindestens ein drittes Schaltglied (16,17) mit dem Ausgang der Kaskadenspeicherzelle in Wirkverbindung steht; und

i) der Ausgang der Archivspeicherzelle (6″) steht über mindestens ein viertes Schaltglied (18,19) mit dem Eingang des ersten Schaltgliedes in Wirkverbindung.

2. Speichereinrichtung nach Anspruch 1, dadurch gekennzeichnet,

a) dass die Arbeitsspeicherzelle (4″) und die beiden Kaskadenspeicherzellen (5″,6″) bistabile Speicherelemente sind;

b) dass jedes der ersten bis vierten Schaltglieder (12-19) zwei NAND-Glieder aufweist;

c) dass die Ausgänge der NAND-Glieder des vierten Schaltgliedes (18,19) je über ein erstes bzw. zweites ODER-Glied (10,11) mit dem Eingang je eines NAND-Gliedes des ersten Schaltgliedes (12,13) in Wirkverbindung stehen;

d) dass der Eingang des ersten ODER-Gliedes (10) mit einer ersten Schreibsignalleitung (W0) in Verbindung steht und der Eingang des zweiten ODER-Gliedes (11) mit einer zweiten Schreibsignalleitung (W1), die ein bezüglich des Schreibsignals in der ersten Schreibsignalleitung komplementäres Schreibsignal führt, in Verbindung steht;

e) dass die Eingänge der NAND-Glieder des ersten Schaltgliedes (12,13) mit dem Adressenbus (2) in Wirkverbindung stehen;

f) dass die Eingänge der NAND-Glieder des zweiten Schaltgliedes (14,15) mit einer Ladeleitung (L) in Wirkverbindung stehen;

g) dass die Eingänge der NAND-Glieder des dritten Schaltgliedes (16,17) mit einer Kopierbefehl-Signalleitung (NV) in Wirkverbindung stehen; und

h) dass die Eingänge der NAND-Glieder des vierten Schaltgliedes (18,19) mit einer Rückladeleitung (RL) in Wirkverbindung stehen.

FIG.1

FIG.2

FIG.3

FIG.4

FIG.5

FIG.6

FIG.7

0 254 247

FIG.8

FIG.9

FIG.10

FIG.11

FIG.12

FIG.13

41/84  2/2 II